Europäisches Patentamt

European Patent Office

Office européen des brevets

(11) Publication number : **0 484 264 A1**

(12) **EUROPEAN PATENT APPLICATION**

(21) Application number : **91500116.8**

(22) Date of filing : **23.10.91**

(51) Int. Cl.⁵ : **B62K 25/00, B62K 21/00**

(30) Priority : **30.10.90 ES 9002746**

(43) Date of publication of application :
**06.05.92 Bulletin 92/19**

(84) Designated Contracting States :
**DE FR GB IT**

(71) Applicant : **Belil Creixell, José Luis**
**C. Homer, 30**
**E-08023 Barcelona (ES)**

(72) Inventor : **Belil Creixell, José Luis**
**C. Homer, 30**
**E-08023 Barcelona (ES)**

(74) Representative : **Ponti Sales, Adelaida**
**Paseo de Gracia, 33**
**E-08007 Barcelona (ES)**

(54) **Rear wheel assembly system for motorcycles and similar vehicles.**

(57)    Consists essentially in fitting the rear wheel
(p) with possibility of relative swivelling on its
vertical diametral axis, coupling it on a bracket
(5,7) articulated on an axis parallel to the plane
of the rear wheel (p), with movement governed
from the steering column of the front fork of the
vehicle and linked in turn by an articulated joint
assembly to the end of the rear-wheel suspen-
sion system (15,16), on the bracket (5,7) of
which is fitted the axle (4) of the vehicle's wheel
(p) and the spindle (9) of the transmission
sprocket, with multidirectional coupling be-
tween them.
    The stability in bends is improved.

FIG.2

The present invention refers to a new rear wheel assembly system of two-wheel vehicles, such as motorcycles and the like, by means of which such vehicles are lent greater stability, especially in taking and following bends, thus benefiting riding safety of the motor-cyclist.

## BACKGROUND OF THE INVENTION

As is very well known, on two-wheel vehicles to date only the front wheel, linked to the handlebar or steering element, is fitted in a swivelling manner on its vertical plane, in order to permit taking and following of bends, although when driving at high speeds, as normally occurs in sports competitions, for example, such wheel swivelling action has to be complemented by leaning of the driver-machine unit, with steeper leaning the higher the speed of the vehicle, this in order to overcome the centrifugal force which arises as a consequence and in function of said speed.

The rear wheel, on the other hand, remains fixed through the corresponding hub to the likewise rear fork, with no possibility at all of swivelling movement, so that when the vehicle takes a bend the front wheel swivels a little, while the rear wheel remains permanently aligned with the frame of the vehicle, according to the longitudinal theoretical axis of the machine. This has been found to be the cause of many of the "skids" which occur in very tight bends, with the consequent risk for the rider, who may even lose control of the machine.

To date, no system is known which might tend to get around this disadvantage, which is the object of the present invention itself, by means of a system which achieves much greater stability of motorcycles and two-wheel vehicles in general in bends.

## DESCRIPTION OF THE INVENTION

In accordance with the invention, the system consists essentially in fitting the rear wheel in order to permit relative swivelling on its substantially vertical diametral axis, for which, instead of fitting it on a hub supported by the rear fork, it is coupled onto a bracket device hinging on an axis substantially parallel to the circumferential plane of the wheel itself, with movement governed from the steering spindle of the vehicle front fork and linked in turn through articulation to the end of the rear wheel suspension system, on whose bracket device is assembled the axle of the vehicle wheel and that of the transmission sprocket, with multi-directional coupling between them.

For this purpose, the rear wheel is advantageously assembled on a plate linked to the spinning axle, which passes through a bracket swivelling in a vertical sense on an axis parallel to the plane of the wheel itself and which has attached to its end at least one tractor element linked to the spindle of the steering column and crossed with respect to the longitudinal virtual axis of the motorcycle, which bracket is in turn linked by joints hinging on the vertical axis itself to a fixed piece, by way of fork, carrying a bearing through which the spindle of the transmission sprocket passes, with the spindle of said sprocket being linked in alignment with the spindle of the plate which has the wheel assembled onto it, through a Cardan joint or the like.

All Joints of the traction elements fitted between the spindle of the front-wheel steering column and the swivelling bracket of the rear wheel take the form of ball joints, in order to facilitate both swivelling movements and angular displacement travel arising during operation of the system.

Finally, the fork which bears the transmission sprocket spindle is linked by a hinge assembly to the corresponding end of rear wheel suspension system, being especially applicable to the specific case of the object of the invention the suspension system claimed in Spanish patents ES-A-8700720 and ES-A-8703028, which the applicant of the present is holder.

In a preferred embodiment, the linkage of the traction element(s) fitted between the spindle of the handlebar and the point of articulation of the latter with the traction element which is linked to the arm of the rear wheel swivelling bracket is implemented through an inverter device formed by a corresponding number of rocker devices, preferably curved, swivelling with centres aligned on the longitudinal virtual axis of the motorcycle, the first of the said traction elements being crossed as indicated with respect to said longitudinal virtual axis, while the second is fitted to one side and parallel to said axis, forming a hinging regular parallelogram with it. For its part, this same traction element may have one of its ends displaced with respect to the ends of the suspension arms, with congruent virtual triangles being thus formed between its ends and those of the suspension arms.

In this way, when the front wheel turns in order to take a bend, a small swivelling movement of the rear wheel in the opposite direction arises automatically, the whole thus adopting a position which "follows" the curved course of one wheel with respect to the other and facilitating swivelling advance.

## BRIEF DESCRIPTION OF THE DRAWINGS

For a better understanding of all that has been set forth, there are attached some drawings in which, in a totally schematic manner and solely by way of example, without restrictive character, a practical case of embodiment of the rear-wheel assembly of a motorcycle is shown, following the system object of the invention.

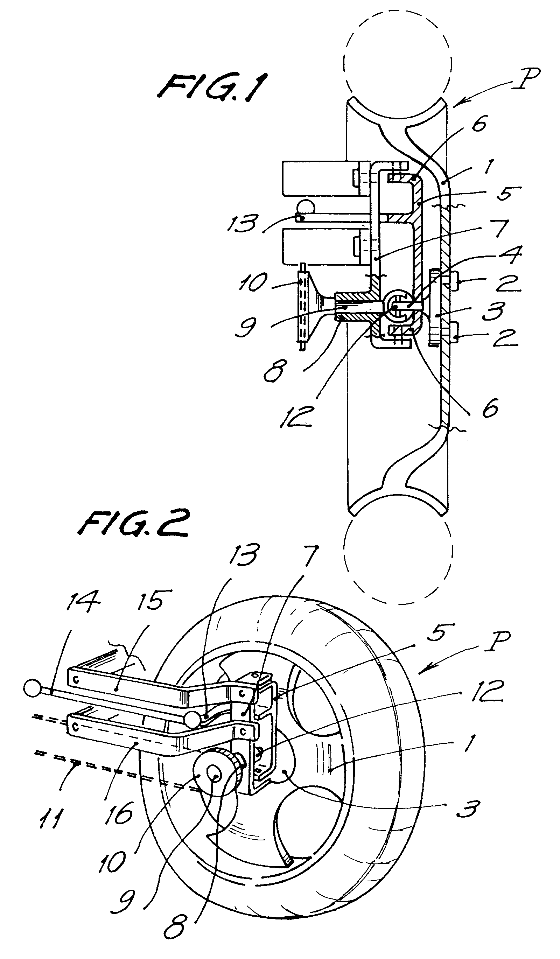

In said drawings, figure 1 is an axial section view of the wheel, showing the arrangement of the component elements of the system in their working positions;

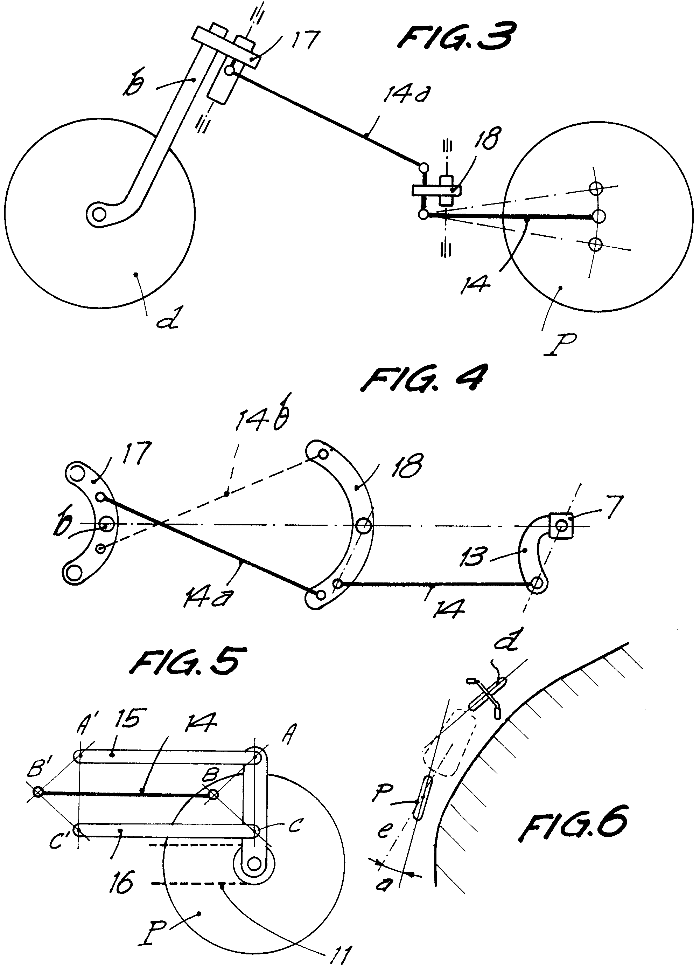

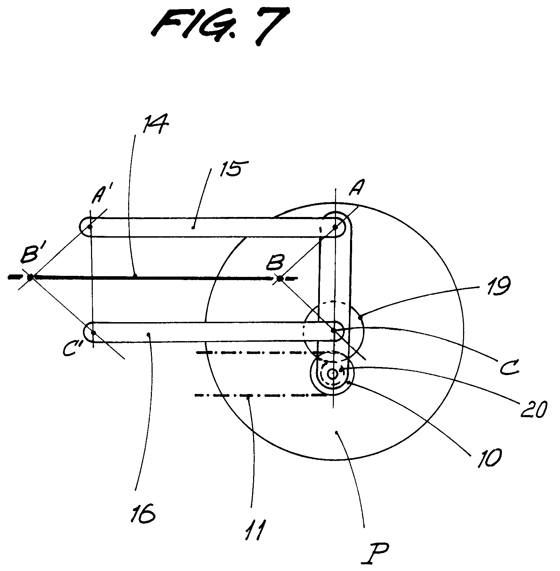

figure 2 is a perspective view of the wheel itself; figures 3 and 4 are schematic views, in elevation and top view, respectively, showing the position adopted by the component elements of the system with respect to the motorcycle; figure 5 corresponds to a geometrical diagram of the traction element with respect to the swinging arms of the suspension; figure 6 is a diagram of the position adopted by the motorcycle in taking and following a curved course through a bend; and figure 7 is a diagram similar to that of figure 5 where suspension and transmission are in another position.

## DESCRIPTION OF A PREFERRED EMBODIMENT

As can be observed in the mentioned designs, the wheel -p-, which may be of any type, provided with a rip -1-, is coupled movably by means of the bolts -2- to a plate -3- on which the spinning axle -4- of said wheel terminates to the exterior.

This axle -4- passes through a bracket -5-, swivelling vertically on an axis parallel to the plane of the wheel itself, which has linked in a hinged manner at the end of its branches -6- the corresponding ones of a fork -7- fitted with a bearing -8-, through which passes the spindle -9- of the sprocket -10- of the transmission -11-. This spindle -9- is coupled to the spindle -4- of the plate -3- which supports the wheel -p- through a Cardan joint -12- or similar multi-directional joint.

The swivelling bracket -5- is linked to a lever arm, on which a traction element -14- is linked, which element is in turn linked to the swivelling axis of the steering column which governs the front wheel fork, crossing the longitudinal virtual axis of the motorcycle, as can be observed in figure 4.

The fork -7- is for its part linked by a hinge mechanism to the end of the arms -15-16- of an articulated parallelogram suspension system, according to a system put forward by Spanish patents ES-A-8700720 and ES-A-8703028, as indicated above in the present description.

In a preferred embodiment, as shown in figure 4, transmission between the traction element -14a- fitted between the spindle or column -b- of the handlebar and the point of articulation of the latter with the traction element -14- which is linked to the arm -13- of the rear-wheel swivelling bracket -7-, is implemented through an inverter device formed by a corresponding number of rocker devices -17- and -18-, preferably curved, swivelling with centres aligned on the longitudinal virtual E axis of the motorcycle, the first of the said traction elements -14a- being crossed as indicated with respect to said longitudinal virtual E axis, while the second -14- is fitted to one side and parallel to said axis, forming a hinging regular parallelogram with it. For its part, this same traction element -14- has its ends displaced with respect to the ends of the suspension arms -15,16- , with congruent virtual triangles (A,B,C;A′,B′,C′) being thus formed between its ends and those of said suspension arms.

Figure 7 shows diagrammatically an embodiment on which the suspension lower arm -16- is articulated in the rear wheel center and the transmission sprocket -10- is coupled to the rear wheel -p- by means of a couple of sprockets -19,20-, one of which being hidden behind the transmission sprocket -10-. In this embodiment the same congruent virtual triangles (A,B,C;A′,B′,C′) can be seen.

Advantageously, the articulation points arranged between the ends of the traction devices -14-14a-, the rocker devices -17- and 18- and the arm -13- are arranged in the form of ball joints, to permit movement of same in any direction.

As indicated by dotted line in figure 4, it may be advisable to fit another traction element -14b-, crossed symmetrically with the first -14a-, so that the distribution of stresses will be balanced when the handlebar is turned in either direction, to the benefit of safety, said traction element being articulated for this purpose at diagonally opposed ends from the rocker devices -17 and -18-, permitting utilization of traction cables or chains.

With the assembly system thus arranged, when there is a relative swivelling of the front-wheel fork of the vehicle, there will arise traction or thrust through the arm -14- onto the lever -13-, which will cause the vertical swivelling of the bracket -5- through which passes the spindle -4- of the plate -3- bearing the rear wheel with respect to the fixed fork -7- at the end of the suspension arms -15,16-.

Swivelling of the assembly will inevitably give rise to a slight swivelling of the rear wheel -p- on its vertical axis, situating it at an angle -p- with respect to the longitudinal theoretical axis -e- of the vehicle, partly following the normal angular displacement of the front wheel -d- (figure 6). The motorcycle will thus tuck normally into the curve and the angular leaning of rider-machine will not necessarily have to be so marked in order to overcome the action of centrifugal force. All this provides better riding conditions and less risk for the rider, especially at high speeds.

As can be seen, the assembly system is very simple and the motorcycle can be fitted with any appropriate transmission and suspension systems, apart from those mentioned or shown in the drawings. Thus, for example, transmission by chain -11- could also adopt an arrangement in consecutive sections of non-aligned chain.

It may finally be stated that the assembly system in question can be adapted to any two-wheel vehicle, although it has been especially designed and conceived for application to vehicles such as motorcycles, particularly racing motorcycles for riding at very high speeds.

## Claims

1. Rear wheel assembly system for motorcycles and similar vehicles, which consists in fitting the rear wheel (p) with possibility of relative swivelling on its substantially vertical diametral axis, coupling it on a bracket device (5,7) articulated on an axis substantially parallel to the circumferential plane of the wheel (p), with movement governed from the steering column of the front fork of the vehicle and hinged linked in turn to the end of the rear-wheel suspension system (15,16), the axle (4) of the vehicle's wheel (p) and the spindle (9) of the transmission sprocket (10) being fitted on the bracket device (5,7), with multi-directional coupling between them.

2. Assembly system according to claim 1, characterized in that the bracket device (5,7) comprises a bracket (5) swivelling in a vertical sense on an axis substantially parallel to the circumferential plane of the wheel (p) and a fixed piece, by way of fork (7), hinged to the swiveling bracket (5) on the substantially vertical axis itself, being coupled to the swiveling bracket (5) an arm or lever (13) to which is coupled the end of at least one traction element (14) linked to the steering column of the front fork of the vehicle, the fork (7) of the bracket device (5,7) carrying a bearing (8) through which the spindle (9) of the transmission sprocket (10) passes, with the spindle (9) of said sprocket (10) being linked in alignment with the spindle (4) of the plate (3) which has the wheel (p) assembled onto it, through a Cardan joint (12) or the like.

3. Assembly system according to claims 1 and 2, characterized in that the transmission between the column (b) of the handlebar and the arm (13) of the swivelling bracket which bears the wheel (p) is implemented through one or more traction devices divided into two sections (14,14a) and through an inverter device formed by a corresponding number of rocker devices (17,18), preferably curved, oscillating with centres aligned on the longitudinal virtual axis E of the motorcycle, on which are articulated the respective ends of said traction elements (14,14a), with the traction element (14a) which is linked to the column (b) of the handlebar being crossed with respect to said longitudinal virtual axis E, while the other traction element (14) is fitted to one side and parallel to said axis, forming an articulated regular parallelogram with it and having its ends displaced with respect to the ends of the suspension arms (15,16), with congruent virtual triangles (A,B,C;A',B',C') being thus formed between its ends and those of the suspension arms.

4. Assembly system according to claims 1 to 3, characterized in that all the joint points of the various traction elements (14,14a) with the rocker devices (17, 18) and with the arm (13) linked to the bracket (5), are implemented in the form of ball socket joint or similar multi-directional joint.

5. Assembly system according to claims 1 to 4, characterized in that it comprises another traction element (14b) crossed with the traction element (14a) which is linked to the column (b) of the handlebar and with the longitudinal virtual axis E of the motorcycle, to balance stresses in swivelling towards one side and another.

6. Assembly system according claims 1 and 2, characterized in that the fork (7) which supports the spindle of the transmission sprocket (10) is hinged to the corresponding end of the rear-wheel suspension system (15,16).

FIG.1

FIG.2

FIG.3

FIG. 4

FIG.5

FIG.6

# FIG. 7

**European Patent Office**

# EUROPEAN SEARCH REPORT

Application Number

EP 91 50 0116

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 651 844 (A.MATSUDA)<br>* column 4, line 56 - column 7, line 19; figures 1-9 * | 1,2,4,6 | B62K25/00<br>B62K21/00 |
| X | US-A-4 650 022 (T.SATO)<br>* column 3, line 28 - column 6, line 35; figures 1-13 * | 1,2,4,6 | |
| X | US-A-4 655 311 (A.MATSUDA)<br>* the whole document * | 1,2,4,6 | |
| A | US-A-4 157 739 (N.FRYE)<br>* column 3, line 7 - line 17; figures 1-4 * | 1,5 | |
| A | DK-A-4 491 (G.VALLEY)<br>* the whole document * | 1 | |
| A | PATENT ABSTRACTS OF JAPAN<br>vol. 14, no. 379 (M-1012)(4322) 16 August 1990<br>& JP-A-2 141 383 ( YAMAHA MOTOR CO. LTD. ) 30 May 1990<br>* abstract * | 1,2,4,6 | TECHNICAL FIELDS SEARCHED (Int. Cl.5 )<br><br>B62K |

The present search report has been drawn up for all claims

| Place of search | Date of completion of the search | Examiner |
|---|---|---|
| THE HAGUE | 04 FEBRUARY 1992 | CZAJKOWSKI A.R. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)